# EUROPEAN PATENT APPLICATION

(11) **EP 4 773 064 A1**
(43) Date of publication of application: **08.07.2026**
(21) Application number: 24858325.4
(22) Date of filing: 15.08.2024
(51) Int. Cl.: G06Q 30/02

(54) **PAGE INTERACTION METHOD AND APPARATUS, DEVICE, AND STORAGE MEDIUM**

(30) Priority: 30.08.2023 CN 202311110470
(71) Applicant: BEIJING YOUZHUJU NETWORK TECHNOLOGY CO. LTD., Beijing 101299 (CN)
(72) Inventor: ZHANG, Xi, Beijing 100028 (CN)
(74) Representative: Isarpatent
(86) International application number: PCT/CN2024/112380
(87) International publication number: WO 2025/044782

(57) **Abstract**

The present disclosure provides a page interaction method and apparatus, a device, and a storage medium. The method comprises: displaying virtual resource interaction prompt information on a first page, wherein the virtual resource interaction prompt information is used for prompting triggering of a preset interaction operation based on a target virtual resource object; and in response to a preset trigger operation for the virtual resource interaction prompt information, displaying on the first page a plurality of virtual resource objects corresponding to target activity objects. Thus, according to embodiments of the present disclosure, virtual resource interaction prompt information is displayed to prompt a user to trigger a preset interaction operation for a target virtual resource object in an interaction-pending state among the target activity objects, and an interaction progress updating method of triggering, by executing an interaction item corresponding to a virtual resource object, the virtual resource object to be updated to a target activity object in the interaction-pending state is provided.

## Description

### CROSS-REFERENCE TO RELATED APPLICATION(S)

The present application claims priority to Chinese Patent Application No. 202311110470.9, filed on August 30, 2023 and entitled "PAGE INTERACTION METHOD, APPARATUS, AND DEVICE, AND STORAGE MEDIUM", which is incorporated herein by reference in its entirety.

### FIELD

The present disclosure relates to the field of data processing, and in particular, to a page interaction method, apparatus, and device, and a storage medium.

### BACKGROUND

With the continuous development of computer technologies, various applications now support an increasing number of page interaction methods, and demands of users for page interaction methods have also become increasingly diversified, such as page interaction methods related to virtual resources.

In order to meet users' increasing and diversified demands for page interaction, how to further enrich the page interaction methods is a pressing technical problem that needs to be addressed.

### SUMMARY

To resolve the above-mentioned technical problem, an embodiment of the present disclosure provides a page interaction method.

According to a first aspect, the present disclosure provides a page interaction method. The method includes:
displaying virtual resource interaction prompt information on a first page, where the virtual resource interaction prompt information is used to prompt triggering of a preset interaction operation based on a target virtual resource object; and
displaying, in response to a preset trigger operation on the virtual resource interaction prompt information, a plurality of virtual resource objects corresponding to a target activity object on the first page, where the plurality of virtual resource objects include the target virtual resource object in a pending-interaction state,
the plurality of virtual resource objects are each configured with a corresponding interaction task, the interaction task being used to trigger a state update of the corresponding virtual resource object to the pending-interaction state, and the interaction task including performing the preset interaction operation based on a virtual resource in the pending-interaction state, and states of the plurality of virtual resource objects are used to represent interaction progress of the target activity object.

In an optional implementation, the method further includes:
performing the preset interaction operation based on the target virtual resource object in response to a preset trigger operation on the target virtual resource object that acts on the first page.

In an optional implementation, before displaying the virtual resource interaction prompt information on the first page, the method further includes:
displaying the target virtual resource object in a pending-acquisition state in response to successful completion of an interaction task corresponding to the target virtual resource object; and
correspondingly, displaying the virtual resource interaction prompt information on the first page includes:
   displaying the virtual resource interaction prompt information on the first page in response to a preset obtaining operation on the target virtual resource object.

In an optional implementation, displaying the target virtual resource object in the pending-acquisition state in response to successful completion of the interaction task corresponding to the target virtual resource includes:
displaying, in response to successful completion of the interaction task corresponding to the target virtual resource object, a task completion page corresponding to the interaction task; and
displaying the target virtual resource object in the pending-acquisition state on the task completion page.

In an optional implementation, displaying the target virtual resource object in the pending-acquisition state in response to successful completion of the interaction task corresponding to the target virtual resource object includes:
displaying the target virtual resource object in the pending-acquisition state on the first page in response to successful completion of the interaction task corresponding to the target virtual resource object.

In an optional implementation, before displaying the virtual resource interaction prompt information on the first page in response to the preset obtaining operation on the target virtual resource object, the method further includes:
displaying a virtual resource obtaining pop-up window on the first page, where the target virtual resource object is presented on the virtual resource obtaining pop-up window; and
correspondingly, displaying the virtual resource interaction prompt information on the first page in response to the preset obtaining operation on the target virtual resource object includes:
   in response to the preset obtaining operation on the target virtual resource object that acts on the virtual resource obtaining pop-up window, controlling the virtual resource obtaining pop-up window to retract along a preset path to a preset page position on the first page, and displaying the virtual resource interaction prompt information at the preset page position.

In an optional implementation, displaying the virtual resource interaction prompt information on the first page includes:
displaying the virtual resource interaction prompt information within a preset page bottom region on the first page, where valid interaction time information of the target virtual resource object is presented within the preset page bottom region.

According to a second aspect, the present disclosure provides a page interaction apparatus. The apparatus includes:
a first display module configured to display virtual resource interaction prompt information on a first page, where the virtual resource interaction prompt information is used to prompt triggering of a preset interaction operation based on a target virtual resource object; and
a second display module configured to display, in response to a preset trigger operation on the virtual resource interaction prompt information, a plurality of virtual resources corresponding to a target activity object on the first page, where the plurality of virtual resource objects include the target virtual resource object in a pending-interaction state, the plurality of virtual resource objects are each configured with a corresponding interaction task, the interaction task being used to trigger a state update of the corresponding virtual resource object to the pending-interaction state, and the interaction task including performing the preset interaction operation based on the virtual resource object in the pending-interaction state, and states of the plurality of virtual resource objects are used to represent interaction progress of the target activity object.

According to a third aspect, the present disclosure provides a computer-readable storage medium having instructions stored therein that, when executed on a terminal device, cause the terminal device to implement the method described above.

According to a fourth aspect, the present disclosure provides a page interaction device. The device includes: a memory, a processor, and a computer program that is stored on the memory and executable on the processor, where the processor, when executing the computer program, implements the method described above.

According to a fifth aspect, the present disclosure provides a computer program product. The computer program product includes a computer program/instructions that, when executed by a processor, causes/cause the method described above to be implemented.

This embodiment of the present disclosure provides the page interaction method. The method specifically includes: displaying the virtual resource interaction prompt information on the first page, where the virtual resource interaction prompt information is used to prompt triggering of the preset interaction operation based on the target virtual resource object; and displaying, in response to receiving the preset trigger operation on the virtual resource interaction prompt information, the plurality of virtual resource objects corresponding to the target activity object on the first page, where the plurality of virtual resource objects include the target virtual resource object in the pending-interaction state, the plurality of virtual resource objects are each configured with the corresponding interaction task, the interaction task being used to trigger the state update of the corresponding virtual resource object to the pending-interaction state, and the interaction task including performing the preset interaction operation based on the virtual resource object in the pending-interaction state, and the states of the plurality of virtual resource objects are used to represent the interaction progress of the target activity object.

### BRIEF DESCRIPTION OF THE DRAWINGS

The accompanying drawings herein, which are incorporated into and form a part of the description, illustrate the embodiments in line with the present disclosure and are used in conjunction with the description to explain the principles of the present disclosure.

In order to more clearly illustrate the technical solutions in the embodiments of the present disclosure or in the related art, the accompanying drawings for describing the embodiments or the related art will be briefly described below. Apparently, those of ordinary skill in the art may still derive other drawings from these accompanying drawings without creative efforts.
FIG. 1 is a flowchart of a page interaction method according to an embodiment of the present disclosure;
FIG. 2 is a schematic diagram of a first page according to an embodiment of the present disclosure;
FIG. 3 is a schematic diagram of another first page according to an embodiment of the present disclosure;
FIG. 4 is a schematic diagram of yet another first page according to an embodiment of the present disclosure;
FIG. 5 is a schematic diagram of a task interaction page according to an embodiment of the present disclosure;
FIG. 6 is a schematic diagram of a first page according to an embodiment of the present disclosure;
FIG. 7 is a schematic structural diagram of a page interaction apparatus according to an embodiment of the present disclosure; and

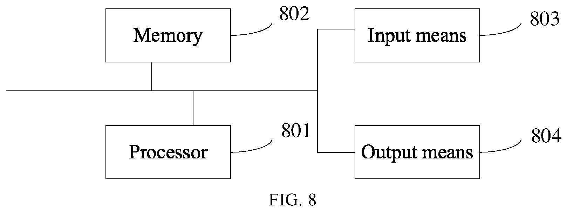

FIG. 8 is a schematic structural diagram of a page interaction device according to an embodiment of the present disclosure.

### DETAILED DESCRIPTION OF EMBODIMENTS

For a clearer understanding of the above-mentioned objectives, features, and advantages of the present disclosure, the solutions of the present disclosure will be further described below. It should be noted that the embodiments of the present disclosure and features in the embodiments may be combined with each other without conflict.

Many specific details are set forth in the following description to facilitate a full understanding of the present disclosure. However, the present disclosure may also be implemented in other ways different from those described herein. Apparently, the embodiments in the description are only some rather than all of the embodiments of the present disclosure.

With the continuous development of computer technologies, various applications now support an increasing number of page interaction methods, and demands of users for page interaction methods have also become increasingly diversified, such as page interaction methods related to virtual resources. In order to meet users' increasing and diversified demands for page interaction, how to further enrich the page interaction methods is a pressing technical problem that needs to be addressed.

To this end, an embodiment of the present disclosure provides a page interaction method. The method specifically includes: displaying virtual resource interaction prompt information on a first page, where the virtual resource interaction prompt information is used to prompt triggering of a preset interaction operation based on a target virtual resource object; and displaying, in response to receiving a preset trigger operation on the virtual resource interaction prompt information, a plurality of virtual resource objects corresponding to a target activity object on the first page, where the plurality of virtual resource objects include the target virtual resource object in a pending-interaction state, the plurality of virtual resource objects are each configured with a corresponding interaction task, the interaction task being used to trigger a state update of the corresponding virtual resource object to the pending-interaction state, and the interaction task including performing the preset interaction operation based on the virtual resource object in the pending-interaction state, and states of the plurality of virtual resource objects are used to represent interaction progress of the target activity object.

It can be learned that in this embodiment of the present disclosure, the virtual resource interaction prompt information is displayed to prompt a user to trigger the preset interaction operation for the target virtual resource object in the pending-interaction state in the target activity object, and a method of triggering, by performing an interaction task corresponding to a virtual resource object, the virtual resource object to the pending-interaction state is provided to update the interaction progress of the target activity object. As such, this embodiment of the present disclosure enriches page interaction methods for virtual resources, improving the page interaction experience of the user.

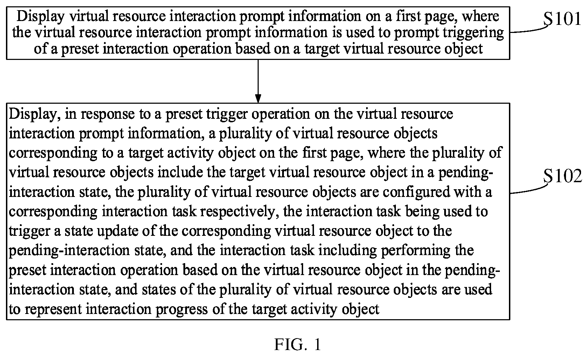

Based on this, an embodiment of the present disclosure provides a page interaction method. FIG. 1 is a flowchart of a page interaction method according to an embodiment of the present disclosure. The method specifically includes the following steps.

S101: Virtual resource interaction prompt information is displayed on a first page.

The virtual resource interaction prompt information is used to prompt triggering of a preset interaction operation based on a target virtual resource object.

The page interaction method provided in this embodiment of the present disclosure is applicable to a client. For example, the client may include a client deployed on a smartphone, a client deployed on a tablet computer, etc.

In this embodiment of the present disclosure, the first page may be any page, such as a mall homepage or a media resource presentation page. The virtual resource interaction prompt information is displayed on the first page.

The target virtual resource object may be specifically a virtual coupon, a virtual red packet, a virtual coin, a point, etc. The virtual resource interaction prompt information may include information of the target virtual resource object on various dimensions, and may specifically include attribute information (e.g., a discount amount of the virtual coupon, or a face value of the virtual red packet), a usage condition, a validity period, an applicable object (e.g., an applicable product object type for the virtual coupon), etc. of the target virtual resource object.

The virtual resource interaction prompt information is displayed on the first page to prompt a current user to trigger the preset interaction operation based on the target virtual resource object. The preset interaction operation may be a product object obtaining operation based on a virtual coupon, etc. In addition, a display position, a display form, etc. of the virtual resource interaction prompt information on the first page may not be limited in this embodiment of the present disclosure.

In an optional implementation, the virtual resource interaction prompt information may be displayed within a preset page bottom region on the first page. Valid interaction time information of the target virtual resource is presented within the preset page bottom region. The valid interaction time information is an available time range of the target virtual resource.

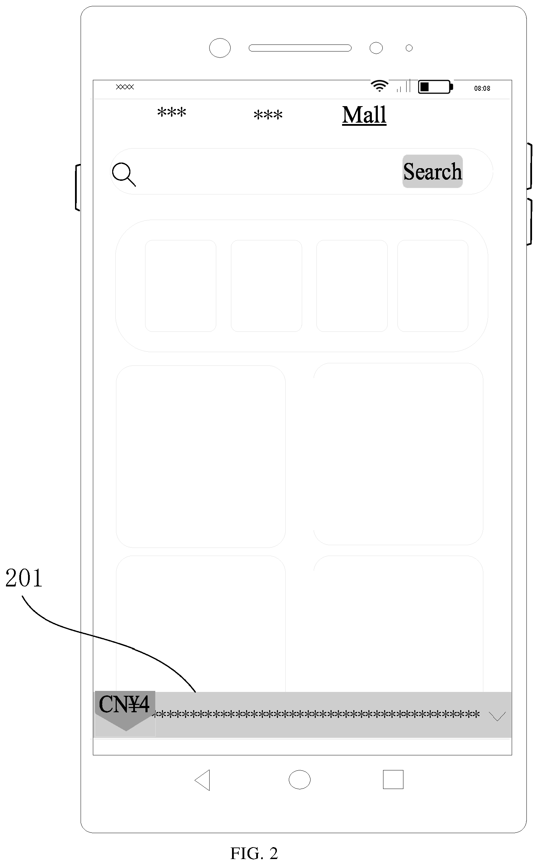

FIG. 2 is a schematic diagram of a first page according to an embodiment of the present disclosure. Assuming that the first page is the mall homepage, virtual resource interaction prompt information 201 is displayed within a bottom region of the mall homepage. Specifically, the virtual resource interaction prompt information 201 includes the attribute information, the usage condition, the validity period, the applicable object, etc. of the target virtual resource object.

According to this embodiment of the present disclosure, the virtual resource interaction prompt information is displayed to prompt the user to trigger the preset interaction operation for the target virtual resource object. The preset interaction operation may specifically include a product object obtaining operation, such as placing an order to purchase a product.

S102: In response to a preset trigger operation on the virtual resource interaction prompt information, a plurality of virtual resource objects corresponding to a target activity object are displayed on the first page.

The plurality of virtual resource objects include the target virtual resource object in a pending-interaction state. The plurality of virtual resource objects are each configured with a corresponding interaction task, the interaction task being used to trigger a state update of the corresponding virtual resource object to the pending-interaction state, and the interaction task including performing the preset interaction operation based on the virtual resource object in the pending-interaction state. States of the plurality of virtual resource objects are used to represent interaction progress of the target activity object.

In this embodiment of the present disclosure, the target activity object may include a preset activity object, such as a product object promotion activity. The plurality of virtual resource objects may be preset for the target activity object. Different virtual resource objects may be of the same type or different types. For example, the plurality of virtual resource objects may include the virtual coupon, the virtual coin, the point, etc.

In this embodiment of the present disclosure, the virtual resource objects are each configured with the corresponding interaction task. Different virtual resource objects correspond to different interaction tasks. Each interaction task is used to trigger the state update of the corresponding virtual resource object to the pending-interaction state. There may be a preset state update sequence between different virtual resource objects. To be specific, a state update of a next virtual resource object to the pending-interaction state can be triggered only after a state update of a preceding adjacent virtual resource object to the pending-interaction state.

The virtual resource object in the pending-interaction state may refer to a virtual coupon in a pending-use state, a virtual red packet in a pending-use state, etc. In this embodiment of the present disclosure, an interaction task corresponding to a virtual resource object in the pending-interaction state can be completed by performing the preset interaction operation, thereby triggering a state update of a next virtual resource object to the pending-interaction state.

The states of the virtual resource objects corresponding to the target activity object may represent the interaction progress of the target activity object. For example, when the last virtual resource object corresponding to the target activity object is updated to the pending-interaction state, it indicates that interaction of the target activity object is about to be completed.

In an optional implementation, the virtual resource interaction prompt information is first displayed on the first page. The plurality of virtual resource objects are displayed on the first page when the preset trigger operation of the user on the virtual resource interaction prompt information is received, where the plurality of virtual resource objects belong to the same target activity object. For example, the plurality of virtual resource objects may be displayed on the first page in the form of a half-screen panel or a 70%-width panel.

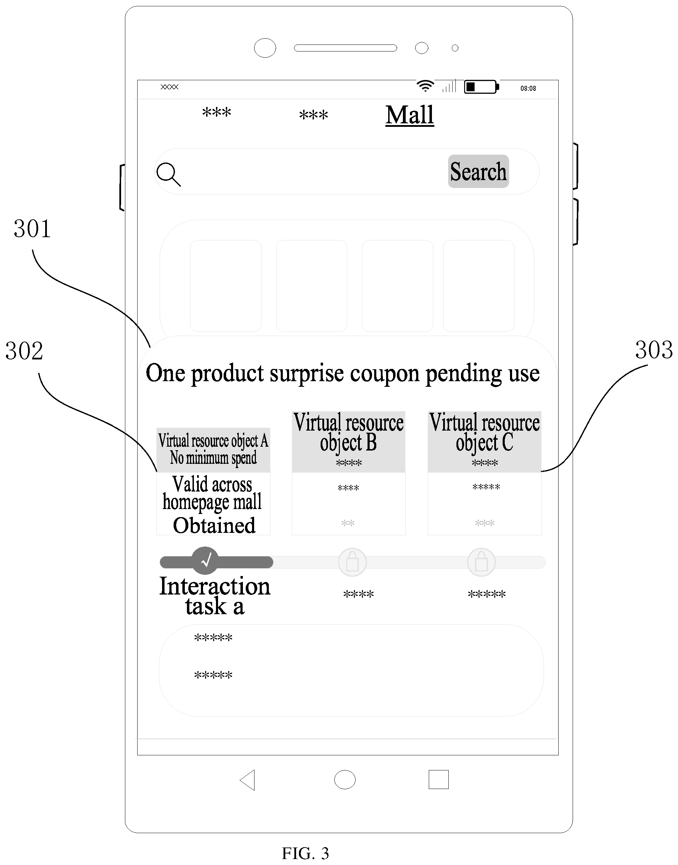

FIG. 3 is a schematic diagram of another first page according to an embodiment of the present disclosure. When the preset trigger operation of the user on the virtual resource interaction prompt information 201 on the first page shown in FIG. 2 is received, a half-screen panel 301 is displayed on the first page, and a plurality of virtual resource objects 302 and 303 corresponding to the target activity object are displayed on the half-screen panel 301. The virtual resource objects 302 and 303 are each configured with a corresponding interaction task. The interaction task is used to trigger a state update of the corresponding virtual resource object to the pending-interaction state. The target virtual resource object 302 is in the pending-interaction state.

In this embodiment of the present disclosure, the user taps the virtual resource interaction prompt information displayed on the first page, to implement a function of invoking the half-screen panel on the first page and displaying, on the half-screen panel, the interaction progress of the target activity object and the states of the plurality of virtual resource objects corresponding to the target activity object, thereby enriching virtual resource-based page interaction methods.

In an actual application, not only can the virtual resource interaction prompt information be displayed on the first page for prompting triggering of the preset interaction operation for the target virtual resource object, but also an entry for triggering the preset interaction operation for the target virtual resource object can be provided on the first page for enabling the user to directly trigger the preset interaction operation for the target virtual resource object, thereby further enriching the page interaction methods.

In another optional implementation, during the process of displaying the plurality of virtual resource objects corresponding to the target activity object, when the preset trigger operation of the user on the target virtual resource object that acts on the first page is received, the preset interaction operation is performed based on the target virtual resource object.

In the page interaction method provided in this embodiment of the present disclosure, specifically, the virtual resource interaction prompt information is displayed on the first page, where the virtual resource interaction prompt information is used to prompt triggering of the preset interaction operation based on the target virtual resource object. The plurality of virtual resource objects corresponding to the target activity object are displayed on the first page in response to receiving the preset trigger operation on the virtual resource interaction prompt information, where the plurality of virtual resource objects include the target virtual resource object in the pending-interaction state, the plurality of virtual resource objects are each configured with the corresponding interaction task, the interaction task being used to trigger the state update of the corresponding virtual resource object to the pending-interaction state, and the interaction task being completed by performing the preset interaction operation based on the virtual resource object in the pending-interaction state, and the states of the plurality of virtual resource objects are used to represent the interaction progress of the target activity object. It can be learned that in this embodiment of the present disclosure, the virtual resource interaction prompt information is displayed to prompt the user to trigger the preset interaction operation for the target virtual resource object in the pending-interaction state in the target activity object, and a method of triggering, by performing an interaction task corresponding to a virtual resource object, the virtual resource object to the pending-interaction state is provided to update the interaction progress of the target activity object. As such, this embodiment of the present disclosure enriches page interaction methods for virtual resources, improving the page interaction experience of the user.

In an actual application, the virtual resource object needs to be obtained first before the virtual resource object is displayed on the first page. In this embodiment of the present disclosure, the target virtual resource object in a pending-acquisition state is displayed on the first page when successful completion of the interaction task corresponding to the target virtual resource object is received, helping the user obtain the target virtual resource object.

In an optional implementation, if the interaction task corresponding to the target virtual resource object is completed on the first page, when successful completion of the interaction task corresponding to the target virtual resource object is received during display of the first page, the target virtual resource object in the pending-acquisition state is displayed on the first page. Then, when a preset obtaining operation of the user on the target virtual resource object is received, the virtual resource interaction prompt information is displayed on the first page.

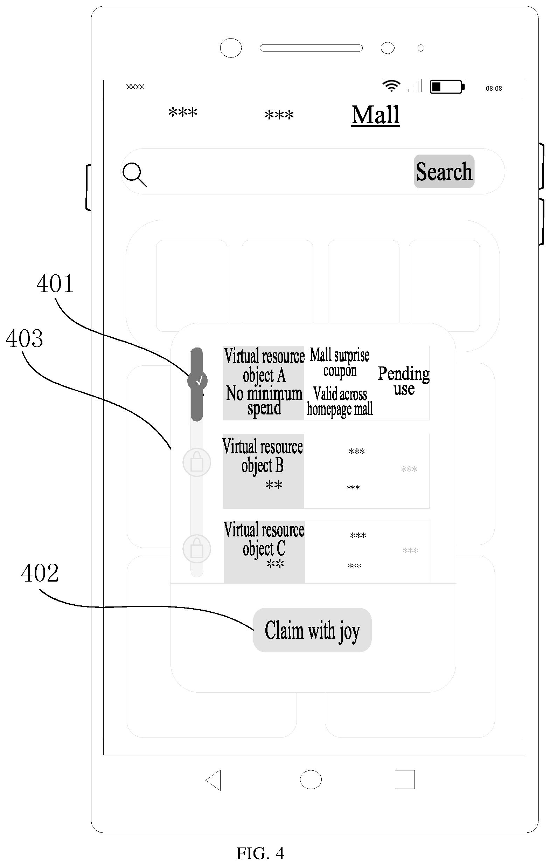

For example, it is assumed that the interaction task for the target virtual resource object is completed on the first page. FIG. 4 is a schematic diagram of yet another first page according to an embodiment of the present disclosure. Virtual resource objects are displayed on the first page, including a target virtual resource object 401 in the pending-interaction state. Then, when the preset obtaining operation of the user on the target virtual resource object is received, the virtual resource interaction prompt information is displayed on the first page.

The preset obtaining operation may include a preset trigger operation, e.g., a double-click operation or a single-click operation, triggered within a display region of the target virtual resource object, or may include a trigger operation on an obtaining control, e.g., an obtaining control 402 shown in FIG. 4, within a display region of the target virtual resource object, or the like.

In an actual application, since the interaction tasks corresponding to the virtual resource objects are generally different, when the interaction task is completed on another page (not the first page), in this embodiment of the present disclosure, the target virtual resource object is displayed on the another page where the interaction task is completed, to enable the user to claim the target virtual resource object on the another page in time, where the target virtual resource object is in the pending-interaction state.

Specifically, when successful completion of the interaction task corresponding to the target virtual resource is received, a task completion page corresponding to the interaction task is displayed, and the target virtual resource in the pending-acquisition state is displayed on the task completion page. The task completion page is a page on which the interaction task corresponding to the target virtual resource is completed, i.e., a page on which the preset interaction trigger operation is completed, such as an order payment page or a product object browsing page. Then, in the process of displaying the target virtual resource object on a task interaction page, when the preset obtaining operation of the user on the target virtual resource is received, redirection from the task interaction page to the first page is triggered, and the virtual resource object interaction prompt information is displayed on the first page.

In this embodiment of the present disclosure, the target virtual resource object is displayed in time on the completion page for the interaction task corresponding to the target virtual resource object, so that an association between the page and the target virtual resource object is improved, and the user is enabled to obtain the target virtual resource object in time on the task interaction page.

In an actual application, in order to further improve the page interaction experience of the user, the target virtual resource object in a pending-claim state may be provided, so that the user can obtain the target virtual resource object through a preset claim operation. In this way, the page interaction experience of the user is improved.

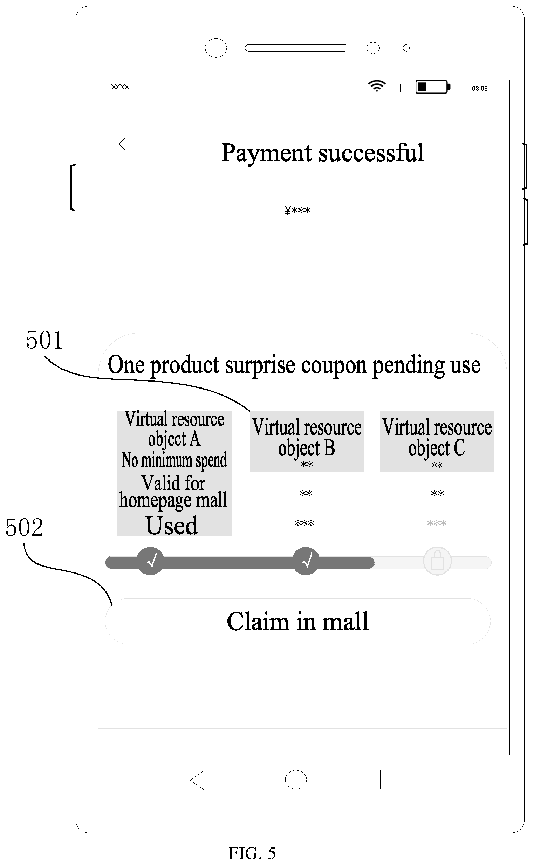

FIG. 5 is a schematic diagram of a task interaction page according to an embodiment of the present disclosure. Assuming that the interaction task is "Place an order with this coupon, to unlock a second order", and the user successfully places an order based on this interaction task, that is, performs the preset interaction operation, a target virtual resource object 501 and a claim control 502 are displayed on an order payment page, where the target virtual resource object is in the pending-interaction state. Then, when the preset claim operation of the user on the target virtual resource object is received, that is, when triggering of the claim control 502 by the user is received, redirection to a corresponding claim page is triggered. When the preset obtaining operation of the user on the claim page is received, the virtual resource interaction prompt information is displayed on the first page after redirection to the first page for the user. The claim page may be any page that can be used to claim the target virtual resource object. The preset claim operation may include a preset trigger operation, e.g., a double-click operation or a single-click operation, triggered within the display region of the target virtual resource object, or may include a trigger operation on a claim control, e.g., the claim control 502 shown in FIG. 5, within the display region of the target virtual resource object, or the like.

In this embodiment of the present disclosure, the claim control is displayed on the task interaction page, so that the user triggers the claim control to obtain the target virtual resource object. This further improves the page interaction experience of the user.

In order to further enrich page interaction methods and improve the page interaction experience of the user, a pop-up window with the target virtual resource object may be further displayed when the user obtains the target virtual resource object, so as to further enrich page interaction methods and improve the page interaction experience of the user.

In an optional implementation, when the interaction task corresponding to the target virtual resource is successfully completed on the first page, a virtual resource obtaining pop-up window is presented on the first page during display of the first page. The target virtual resource object is displayed on the virtual resource obtaining pop-up window. When the preset obtaining operation of the user on the target virtual resource object that acts on the virtual resource obtaining pop-up window is received, the client controls the virtual resource obtaining pop-up window to retract along a preset path to a preset page position on the first page, and displays the virtual resource interaction prompt information at the preset page position.

In this embodiment of the present disclosure, the preset path may be set specifically based on requirements. For example, the path may be preset based on a certain curve. This is not limited in this embodiment of the present disclosure.

In addition, the preset page position is used to display the virtual resource interaction prompt information. A specific display position is not limited in this embodiment of the present disclosure.

In an actual application, when the interaction task corresponding to the target virtual resource object is completed on another page, i.e., a task interaction page, the pop-up window with the target virtual resource object may also be displayed when the user obtains the target virtual resource object, so as to further enrich page interaction methods and improve the page interaction experience of the user.

In an optional implementation, after the user performs and successfully completes the preset interaction trigger operation on the task interaction page based on the interaction task, the target virtual resource is displayed on the task interaction page. When the preset obtaining operation of the user on the target virtual resource is received, the virtual resource obtaining pop-up window may be displayed on the task interaction page, and the target virtual resource object pending acquisition may be presented on the virtual resource obtaining pop-up window. When the preset obtaining operation of the user on the target virtual resource object that acts on the virtual resource obtaining pop-up window is received, redirection from the task interaction page to the first page is triggered, and the virtual resource interaction prompt information is displayed at the preset page position on the first page.

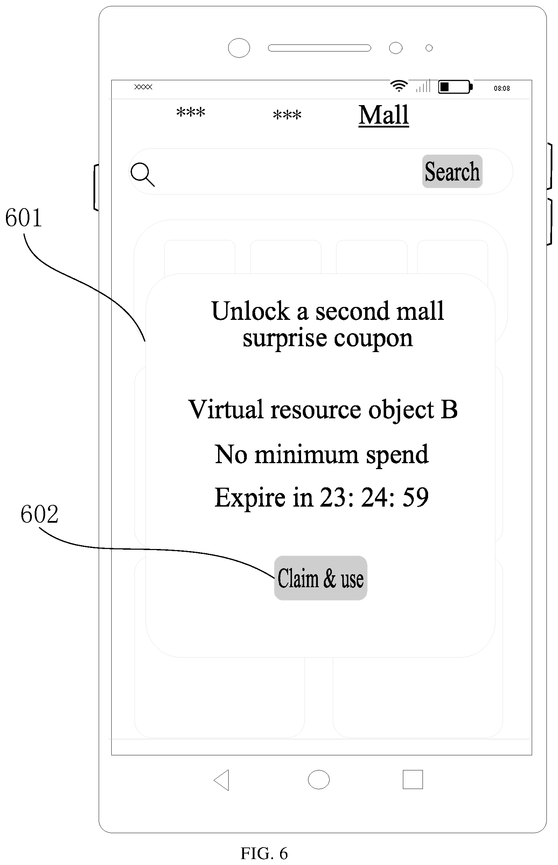

When the target virtual resource object is displayed on the task interaction page, and the preset claim operation is set on the task interaction page, the virtual resource obtaining pop-up window may also be displayed. In another optional implementation, FIG. 6 is a schematic diagram of a first page according to an embodiment of the present disclosure. During display of the target virtual resource object and the preset claim operation on the task interaction page, when a trigger operation of the user on a claim control is received, redirection from the task interaction page to the first page is triggered, and a virtual resource obtaining pop-up window 601 is displayed on the first page. The target virtual resource is presented on the virtual resource obtaining pop-up window. When the preset obtaining operation of the user on the target virtual resource is received, the client controls the virtual resource obtaining pop-up window to retract along a preset path to a preset page position on the first page, and displays the virtual resource interaction prompt information at the preset page position.

In this embodiment of the present disclosure, during the process in which the user obtains the target virtual resource object, the virtual resource obtaining pop-up window is preset, and the target virtual resource object is presented on the virtual resource obtaining pop-up window, so that page interaction methods are further enriched, and the page interaction experience of the user is further improved.

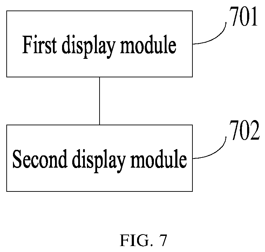

Based on the above-mentioned method embodiment, the present disclosure further provides a page interaction apparatus. FIG. 7 is a schematic structural diagram of a page interaction apparatus according to an embodiment of the present disclosure. The apparatus includes:
a first display module 701 configured to display virtual resource interaction prompt information on a first page, where the virtual resource interaction prompt information is used to prompt triggering of a preset interaction operation based on a target virtual resource object; and
a second display module 702 configured to display, in response to a preset trigger operation on the virtual resource interaction prompt information, a plurality of virtual resource objects corresponding to a target activity object on the first page, where the plurality of virtual resources include the target virtual resource object in a pending-interaction state, the plurality of virtual resource objects are each configured with a corresponding interaction task, the interaction task being used to trigger a state update of the corresponding virtual resource object to the pending-interaction state, and the interaction task including performing the preset interaction operation based on the virtual resource object in the pending-interaction state, and states of the plurality of virtual resource objects are used to represent interaction progress of the target activity object.

In an optional implementation, the apparatus further includes:
an execution module configured to perform the preset interaction operation based on the target virtual resource object in response to a preset trigger operation on the target virtual resource object acting on the first page.

In an optional implementation, the apparatus further includes:
a third display module configured to display the target virtual resource object in a pending-acquisition state in response to successful completion of an interaction task corresponding to the target virtual resource object; and
correspondingly, the first display module is specifically configured to:
   display the virtual resource interaction prompt information on the first page in response to a preset obtaining operation on the target virtual resource object.

In an optional implementation, the third display module includes:
a first display sub-module configured to display, in response to successful completion of the interaction task corresponding to the target virtual resource object, a task completion page corresponding to the interaction task; and
a second display sub-module configured to display the target virtual resource object in the pending-acquisition state on the task completion page.

In an optional implementation, the third display module is specifically configured to:
display the target virtual resource object in the pending-acquisition state on the first page in response to successful completion of the interaction task corresponding to the target virtual resource object.

In an optional implementation, the apparatus further includes:
a fourth display module configured to display a virtual resource obtaining pop-up window on the first page, where the target virtual resource object is presented on the virtual resource obtaining pop-up window; and
correspondingly, the first display module is specifically configured to:
   in response to the preset obtaining operation on the target virtual resource object that acts on the virtual resource obtaining pop-up window, control the virtual resource obtaining pop-up window to retract along a preset path to a preset page position on the first page, and display the virtual resource interaction prompt information at the preset page position.

In an optional implementation, the apparatus includes:
a fifth display module configured to display the virtual resource interaction prompt information within a preset page bottom region on the first page, where valid interaction time information of the target virtual resource object is presented within the preset page bottom region.

In the page interaction method provided in this embodiment of the present disclosure, specifically, the virtual resource interaction prompt information is displayed on the first page, where the virtual resource interaction prompt information is used to prompt triggering of the preset interaction operation based on the target virtual resource object. The plurality of virtual resource objects corresponding to the target activity object are displayed on the first page in response to receiving the preset trigger operation on the virtual resource interaction prompt information, where the plurality of virtual resource objects include the target virtual resource object in the pending-interaction state, the plurality of virtual resource objects are each configured with the corresponding interaction task, the interaction task being used to trigger the state update of the corresponding virtual resource object to the pending-interaction state, and the interaction task including performing the preset interaction operation based on the virtual resource object in the pending-interaction state, and the states of the plurality of virtual resource objects are used to represent the interaction progress of the target activity object. It can be learned that in this embodiment of the present disclosure, the virtual resource interaction prompt information is displayed to prompt a user to trigger the preset interaction operation for the target virtual resource object in the pending-interaction state in the target activity object, and a method of triggering, by performing an interaction task corresponding to a virtual resource object, the virtual resource object to the pending-interaction state is provided to update the interaction progress of the target activity object. As such, this embodiment of the present disclosure enriches page interaction methods for virtual resources, improving the page interaction experience of the user.

In addition to the method and apparatus described above, an embodiment of the present disclosure further provides a computer-readable storage medium having instructions stored therein that, when executed on a terminal device, cause the terminal device to implement the page interaction method described in the embodiments of the present disclosure.

An embodiment of the present disclosure further provides a computer program product. The computer program product includes a computer program/instructions that, when executed by a processor, causes/cause the page interaction method described in the embodiments of the present disclosure to be implemented.

In addition, an embodiment of the present disclosure further provides a page interaction device. As shown in FIG. 7, the device may include:
a processor 701, a memory 702, an input means 703, and an output means 704, where there may be one or more processors 701 in the page interaction device, for example, there is one processor in FIG. 7; and in some embodiments of the present disclosure, the processor 701, the memory 702, the input means 703, and the output means 704 may be connected through a bus or in another manner, for example, are connected through the bus in FIG. 7.

The memory 702 may be configured to store a software program and a module. The processor 701 performs various functional applications of the page interaction device and processes data by executing the software program and the module stored in the memory 702. The memory 702 may mainly include a program storage area and a data storage area. The program storage area may store an operating system, an application required by at least one function, and the like. In addition, the memory 702 may include a highspeed random-access memory, and may further include a non-volatile memory, such as at least one magnetic disk storage device, a flash memory device, or other volatile solid-state storage devices. The input means 703 may be configured to receive entered numerical or character information, and generate a signal input related to a user setting and function control of the page interaction device.

Specifically, in this embodiment, the processor 701 loads an executable file corresponding to a process of one or more applications into the memory 702 in accordance with the following instructions, and the processor 701 runs the application stored in the memory 702, to implement various functions of the above-mentioned page interaction device.

It should be noted that the relational terms such as "first" and "second" herein are only used to distinguish one entity or operation from another, and do not necessarily require or imply that any actual relationship or sequence exists between these entities or operations. Moreover, the terms "include", "including", "comprise" and "comprising", or any of their variants are intended to cover a non-exclusive inclusion, so that a process, method, article, or device that includes a list of elements not only includes those elements but also includes other elements that are not expressly listed, or further includes elements inherent to such process, method, article, or device. In the absence of more restrictions, an element defined by "including/comprising a/an ..." does not exclude another identical element in a process, method, article, or device that includes the element.

The above-mentioned description illustrates merely specific implementations of the present disclosure, such that those skilled in the art can understand or implement the present disclosure. Various modifications to these embodiments are apparent to those skilled in the art, and the general principle defined herein may be practiced in other embodiments without departing from the spirit or scope of the present disclosure. Therefore, the present disclosure will not be limited to the embodiments described herein, but extends to the widest scope that complies with the principles and novelty disclosed in this specification.

## Claims

1. A page interaction method, comprising:
displaying virtual resource interaction prompt information on a first page, wherein the virtual resource interaction prompt information is used to prompt triggering of a preset interaction operation based on a target virtual resource object; and
displaying, in response to a preset trigger operation on the virtual resource interaction prompt information, a plurality of virtual resource objects corresponding to a target activity object on the first page, wherein the plurality of virtual resource objects comprise the target virtual resource object in a pending-interaction state, the plurality of virtual resource objects are configured with a corresponding interaction task respectively, the interaction task being used to trigger a state update of the corresponding virtual resource object to the pending-interaction state, and the interaction task comprising performing the preset interaction operation based on the virtual resource object in the pending-interaction state, and states of the plurality of virtual resource objects are used to represent interaction progress of the target activity object.

2. The method according to claim 1, further comprising:
performing the preset interaction operation based on the target virtual resource object in response to a preset trigger operation on the target virtual resource object that acts on the first page.

3. The method according to claim 1, wherein before displaying the virtual resource interaction prompt information on the first page, the method further comprises:
displaying the target virtual resource object in a pending-acquisition state in response to successful completion of an interaction task corresponding to the target virtual resource object; and
wherein, displaying the virtual resource interaction prompt information on the first page comprises:
displaying the virtual resource interaction prompt information on the first page in response to a preset obtaining operation on the target virtual resource object.

4. The method according to claim 3, wherein displaying the target virtual resource object in the pending-acquisition state in response to successful completion of the interaction task corresponding to the target virtual resource object comprises:
displaying, in response to successful completion of the interaction task corresponding to the target virtual resource object, a task completion page corresponding to the interaction task; and
displaying the target virtual resource object in the pending-acquisition state on the task completion page.

5. The method according to claim 3, wherein displaying the target virtual resource object in the pending-acquisition state in response to successful completion of the interaction task corresponding to the target virtual resource object comprises:
displaying the target virtual resource object in the pending-acquisition state on the first page in response to successful completion of the interaction task corresponding to the target virtual resource object.

6. The method according to claim 3, wherein before displaying the virtual resource interaction prompt information on the first page in response to the preset obtaining operation on the target virtual resource object, the method further comprises:
displaying a virtual resource obtaining pop-up window on the first page, wherein the target virtual resource object is presented on the virtual resource obtaining pop-up window; and
wherein, displaying the virtual resource interaction prompt information on the first page in response to the preset obtaining operation on the target virtual resource object comprises:
in response to the preset obtaining operation on the target virtual resource object that acts on the virtual resource obtaining pop-up window, controlling the virtual resource obtaining pop-up window to retract along a preset path to a preset page position on the first page, and displaying the virtual resource interaction prompt information at the preset page position.

7. The method according to claim 1, wherein displaying the virtual resource interaction prompt information on the first page comprises:
displaying the virtual resource interaction prompt information within a preset page bottom region on the first page, wherein valid interaction time information of the target virtual resource object is presented within the preset page bottom region.

8. A page interaction apparatus, comprising:
a first display module configured to display virtual resource interaction prompt information on a first page, wherein the virtual resource interaction prompt information is used to prompt triggering of a preset interaction operation based on a target virtual resource object; and
a second display module configured to display, in response to a preset trigger operation on the virtual resource interaction prompt information, a plurality of virtual resource objects corresponding to a target activity object on the first page, wherein the plurality of virtual resource objects comprise the target virtual resource object in a pending-interaction state, the plurality of virtual resource objects are configured with a corresponding interaction task respectively, the interaction task being used to trigger a state update of the corresponding virtual resource object to the pending-interaction state, and the interaction task comprising performing the preset interaction operation based on the virtual resource object in the pending-interaction state, and states of the plurality of virtual resource objects are used to represent interaction progress of the target activity object.

9. A computer-readable storage medium having instructions stored therein that, when executed on a terminal device, cause the terminal device to implement the method according to any of claims 1 to 7.

10. A page interaction device, comprising: a memory, a processor, and a computer program that is stored on the memory and executable on the processor, wherein the processor, when executing the computer program, implements the method according to any of claims 1 to 7.

11. A computer program product, comprising instructions that, when executed by a processor, cause the method according to any one of claims 1 to 7 to be implemented.
